# EUROPÄISCHE PATENTSCHRIFT

(11) **EP 2 045 046 B1**
(45) Veröffentlichungstag und Bekanntmachung des Hinweises auf die Patenterteilung: **01.09.2010**
(21) Anmeldenummer: 08016074.0
(22) Anmeldetag: 12.09.2008
(51) Int. Cl.: B25G 1/10, B29C 45/16

(54) **Griff für ein Werkzeug**
Handle for a tool
Poignée pour un outil

(30) Priorität: 05.10.2007 DE 202007013989 U; 22.10.2007 DE 102007050742; 23.02.2008 DE 102008010755
(43) Veröffentlichungstag der Anmeldung: 08.04.2009
(73) Patentinhaber: Felo-Werkzeugfabrik Holland-Letz GmbH, 35279 Neustadt (DE)
(72) Erfinder: Holland-Letz, Horst, 35279 Neustadt (DE)
(74) Vertreter: Rehberg Hüppe + Partner

(56) Entgegenhaltungen:
- WO-A-2007/079979
- DE-A1- 19 803 946
- GB-A- 2 274 615

## Beschreibung

Die Erfindung betrifft einen Griff für ein Werkzeug zur Übertragung eines Torsionsmomentes, einer Querkraft oder Schlagkraft oder einer Druckkraft, beispielsweise einen Griff für einen Schraubendreher, eine Maurerkelle, einen Hammer, einen Stechbeitel, eine Säge, ein Hand-oder Gartengerät oder ein Griff für ein Sportgerät, Freizeitgerät oder Fahrrad.

### STAND DER TECHNIK

Zur Verbesserung der Haptik und Ergonomie eines Griffes eines Schraubendrehers werden für die Griffe eingesetzte Kunststoffe gezielt mit Weichmachern versehen, die dem Griff zumindest eine radiale Elastizität verleihen sollen, so dass sich der Griff der Hand eines Benutzers besser anpassen kann. Während herkömmliche sogenannte "Zwei-Komponenten-Griffe" zunächst davon ausgegangen sind, eine den Kerngriff bildende innere Schicht des Griffes steif oder hart auszubilden und diese innere Schicht mit einer verhältnismäßig dünnen weichen äußeren Schicht zu ummanteln, um eine Verbesserung der Haptik zu erreichen, ist in Anmeldungen der Anmelderin (vgl. WO 2007/079787 , WO 2007 079 979 und WO 2007/048555) ein anderer Weg vorgeschlagen worden: Hier ist die äußere Schicht härter als eine innere Schicht ausgebildet, so dass sich eine beständige, verhältnismäßig harte Oberfläche ergibt. Durch eine Vorgabe der radialen Schichtdicke der äußeren Schicht kann dennoch eine radiale Verformbarkeit des Griffes gewährleistet werden, wobei die äußere Schicht radial innenliegend durch die innere Schicht verhältnismäßig weich abgestützt ist. Anders gesagt nimmt für den eingangs genannten herkömmlichen Zwei-Komponenten-Griff die Steifigkeit radial nach innen zu, während für die genannten Griffe der Anmelderin die Steifigkeit von der äußeren Schicht zur inneren Schicht radial nach innen abnimmt. Darüber hinaus schlägt die Anmelderin in den genannten Anmeldungen vor, den Griff in der Art eines "Drei-Komponenten-Griffes" auszubilden, da der Griff mit einem harten Griffkern, einer weichen inneren Schicht und einer härteren äußeren Schicht aufgebaut ist, wobei zwischen Griffkern und weicherer innerer Schicht zusätzlich eine Griffkern-Ummantelung vorgesehen sein kann. In den genannten Anmeldungen der Anmelderin wird vorzugsweise die Ausgestaltung der inneren Schicht mit einer Härte von 10 bis 55 Shore A und der äußeren Schicht mit einer Härte von 30 bis 60 Shore A vorgeschlagen.

Die meisten marktüblichen thermoplastischen Elastomere (TPEs) sind Compounds aus verschiedenen Typen von Kunststoffen. Die Einstellung des gewünschten Härtegrades erfolgt durch Einarbeitung von Weichmachern in das Compound. Solche Weichmacher sind z. B. Paraffinöl oder Phtalate, die zu einer "äußeren" Weichmachung verwendet werden können. Bei einer derartigen "äußeren" Weichmachung befindet sich der Weichmacher frei zwischen einzelnen Molekülketten in nicht gebundener Form. Derartige freie Weichmacher neigen zu einer Migration in angrenzende Schichten. Hinzu kommt, dass der Gehalt des Weichmachers in einem Kunststoff umso größer wird, je geringer die gewünschte Härte ist, wodurch eine etwaige Migration noch verstärkt wird.

### AUFGABE DER ERFINDUNG

Der vorliegenden Erfindung liegt die Aufgabe zugrunde, einen Griff für ein Werkzeug zur Übertragung eines Torsionsmomentes oder einer Druckkraft vorzuschlagen, bei welchem die Migration des Weichmachers vermieden ist oder auf ein tolerierbares Ausmaß beschränkt ist.

### LÖSUNG

Die der Erfindung zugrunde liegende Aufgabe wird gelöst durch einen Griff mit den Merkmalen des Patentanspruch 1. Weitere Ausgestaltungen des erfindungsgemäßen Griffes ergeben sich entsprechend den Merkmalen der abhängigen Patentansprüche 2 bis 8.

### BESCHREIBUNG DER ERFINDUNG

Der vorliegenden Erfindung liegt die Erkenntnis zugrunde, dass bei üblichen Griffen mit Schichten unterschiedlicher Härte ein Gefälle im Weichmachergehalt von einer weicheren Schicht zu einer härten Schicht besteht. Infolge dieses Gefälles wandert Weichmacher aus der weicheren Schicht in die härtere Schicht. Dieses Wandern bzw. die Migration hat zunächst zur Folge, dass sich die Härte in den Schichten von den konstruktiv und herstellungsbedingt vorgegebenen Werten wegbewegt, so dass der Griff mit der Zeit seine vorbestimmten Eigenschaften verliert. Darüber hinaus kann sich infolge der Migration auf der Oberfläche des Griffes, also der Mantelfläche der äußeren Schicht, ein Film aus dem Weichmacher ausbilden. Ein derartiger Film ist unerwünscht, weil dieser die Reibung zwischen der Hand des Benutzers und der Mantelfläche des Griffes mindert. Ein hoher Reibwert ist aber zur Übertragung eines Drehmoments, beispielsweise im Fall des Einsatzes des Griffes für einen Schraubendreher, erforderlich.

Auf dieser Erkenntnis aufbauend, hat die Erfindung einerseits erkannt, dass Ursache der genannten Migration ein Gefälle des freien Weichmachers in den einzelnen Schichten ist. Im Extremfall bedeutet dies, dass das Problem der Migration beseitigt oder weitestgehend eingeschränkt werden kann, wenn die einzelnen Schichten gleiche freie Weichmachergehalte besitzen. Andererseits haben Untersuchungen der Anmelderin zu dem Ergebnis geführt, dass der Einsatz exakt gleicher Weichmachergehalte zur Vermeidung der Migration nicht zwingend erforderlich ist. Vielmehr scheint eine gewisse Abweichung der Gehalte der Weichmacher in der inneren und äußeren Schicht möglich, ohne dass eine übermäßige Migration des Weichmachers auftritt oder eine Migration auftritt, die zu den geschilderten unerwünschten Effekten führt. Hier schlägt die Erfindung vor, in den für die innere Schicht und die äußere Schicht verwendeten Kunststoffen kein größeres Gefälle des freien Weichmachergehalts von der inneren Schicht zur äußeren Schicht vorzusehen, wobei das Gefälle derart begrenzt ist, dass der die innere Schicht bildende Kunststoff einen freien Weichmachergehalt enthält, der wenigstens 60 % und höchstens 130 %, insbesondere wenigstens 70 % und höchstens 120 %, beispielsweise wenigstens 90 % und höchstens 110 %, des freien Weichmachergehalts in dem die äußere Schicht bildenden Kunststoff beträgt. Im Rahmen der vorliegenden Erfindung wird unter einem Weichmachergehalt der Gewichtsanteil des Weichmachers bezogen auf das Gewicht des in der Schicht eingesetzten Kunststoffs, ggf. mit weitern Zusatzstoffen, ohne den Weichmacher verstanden. Hierbei bezeichnet der "freie Weichmachergehalt" lediglich den derart definierten Gehalt des frei in der Schicht vorhandenen Weichmachers, ohne dass das Gewicht eines etwaig in einer Molekülkette des Kunststoffs gebundenen Weichmachers oder eines in dem Kunststoff-Compound enthaltenen von Natur aus weichen Anteils, zum Beispiel eines Kautschuks, hierin eingeschlossen ist.

Um trotz des begrenzten Gefälles des freien Weichmachergehalts die gewünschten unterschiedliche Härten der inneren und äußeren Schicht herbeizuführen, schlägt die Erfindung unterschiedliche alternative oder kumulative Maßnahmen vor:
- Entsprechend einer ersten Ausgestaltung der Erfindung kann die unterschiedliche Härte der inneren und äußeren Schicht dadurch herbeigeführt werden, dass zwar die freien Weichmachergehalte in den Schichten lediglich ein begrenztes Gefälle aufweisen. Allerdings besitzt für diese Variante die weichere innere Schicht einen zusätzlichen gebundenen Weichmachergehalt, so dass zumindest die innere Schicht in ihrem Steifigkeitsverhalten beeinflusst wird durch die kumulative Wirkung von freiem Weichmacher und gebundenem Weichmacher. Lediglich beispielhaft ist zu erwähnen, dass in der inneren Schicht zur Herbeiführung einer verringerten Härte im Vergleich zur äußeren Schicht ein gebundener Polyester-Weichmacher Einsatz finden kann. Es kann auch das für die innere Schicht verwendete Compound anders zusammengesetzt sein als das für die äußere Schicht. Das Compound der inneren Schicht kann beispielsweise auch einen von Natur aus weichen weichmacherfreien Kautschuk enthalten.
- Entsprechend kann in beiden Schichten in die Molekülketten gebundener Weichmacher eingesetzt sein, wobei allerdings der gebundene Weichmachergehalt in der inneren Schicht höher ist als in der äußeren Schicht.
- Für eine weitere Ausführungsform der Erfindung kann eine Beeinflussung der Härte, nämlich eine gewünschte Erhöhung der Härte der äußeren Schicht dadurch herbeigeführt werden, dass in der äußeren Schicht ein harter Füllstoff vorgesehen ist, oder der Gehalt des harten Füllstoffs in der äußeren Schicht größer ist als ein ebenfalls vorhandener Gehalt des harten Füllstoffs in der inneren Schicht oder in ihr ein Füllstoff gänzlich fehlen. Lediglich beispielhaft werden als mögliche Füllstoffe zur Erhöhung der Härte eines Kunststoffs Kreide, Glaskugeln, Glimmer, Glasfasern, Holzmehl oder ähnliche harte Verbundmaterialien erwähnt.
- Selbstverständlich ist es ebenfalls möglich, dass eine Beeinflussung der Härten der inneren und äußeren Schicht sowohl durch den Einsatz eines gebundenen Weichmachers als auch durch die Variation des Gehalts des Füllstoffs erfolgt.

Für eine weitere Ausgestaltung des erfindungsgemäßen Griffs weist der die innere Schicht bildende Kunststoff einen Schmelzfluss-Index oder eine Schmelze-Volumenfließrate MVR auf, welche(r) höchstens 30 %, bevorzugt höchsten 20 %, vom Schmelzfluss-Index oder der Schmelze-Volumenfließrate MVR des die äußere Schicht bildenden Kunststoffs abweicht. Unter Schmelzfluss-Index wird das Fließvermögen des Kunststoffs bei definierten Temperaturen und Drücken bezeichnet. Der Schmelzflussindex (engl. auch MFI = Melt Flow Index oder MFR = Melt Flow Rate) dient zur Charakterisierung des Fließverhaltens (Formmassenprüfung) eines Thermoplasten bei bestimmten Druck- und Temperaturbedingungen. Er ist ein Maß für die Viskosität einer Kunststoffschmelze. Daraus lässt sich auf den Polymerisationsgrad, also die mittlere Anzahl von Monomereinheiten in einem Molekül schließen. Der MFI wird mittels eines Kapillarrheometers nach DIN EN ISO 1133 ermittelt, wobei das Material (Granulat oder Pulver) in einem beheizbaren Zylinder aufgeschmolzen und unter Druck durch eine Düse (Kapillare) gedrückt wird. Ermittelt wird die Masse der Polymerschmelze (des Extrudats) als Funktion der Zeit (10 Minuten). Durch Einsatz von Kunststoffen mit den genannten Schmelzfluss-Indizes kann eine gewünschte Ausbildung der Schichten in Längs- und Radialrichtung innerhalb des Griffkörpers und eine fehlerfreie Oberfläche auf dem Griff zu erreicht werden. Für die Herstellung der Griffe finden insbesondere Materialien mit MVR-Raten von 5 bis 80, vorzugsweise 20 bis 60 cm³ Einsatz, gemessen bei einer Temperatur von 200 °C und einer Belastung des Kolbens des Prüfgerätes mit 2,16 kg.

Ebenfalls möglich ist eine Herstellungsweise, bei der die innere Schicht in einem ersten Spritzgieß-Schritt in einer ersten Form auf den Griffkern aufgespritzt wird. Hieran anschließend wird die äußere Schicht in einer zweiten Form auf die innere Schicht in einem zweiten Spritzgieß-Schritt aufgespritzt. Dabei ist die Formkavität der zweiten Form um so viel größer als die Formkavität der ersten Form, wie zur Ausbildung der radialen Erstreckung der zweiten Schicht erforderlich ist (unter Berücksichtigung etwaiger Änderungen mit einem Abkühlen). Ein derartiges Verfahren ist ohne Ausbildung einer Griffkern-Ummantelung möglich, wobei auch der Griffkern vor dem Einlegen in die genannte erste Form mit einer Griffkern-Ummantelung versehen sein kann.

Vorzugsweise findet die erfindungsgemäße Vermeidung der Migration des Weichmachers Einsatz für einen Griff, der in der genannten Reihenfolge einen Griffkern, eine Griffkern-Ummantelung, die innere Schicht und die äußere Schicht besitzt. Bei diesem Griff bestehen die Griffkern-Ummantelung und die äußere Schicht aus demselben Material. Griffkern-Ummantelung, innere Schicht und äußere Schicht sind in einem Sandwichverfahren auf den Griffkern aufgespritzt. Hierbei kann es sich um ein Sandwichverfahren handeln, bei dem in eine einzige Form, in die der Griffkern eingelegt ist, zunächst ein erstes Material eingespritzt wird, welches zu einem späteren Zeitpunkt die Griffkern-Ummantelung sowie die äußere Schicht bildet und hieran anschließend, bevor das erste Material vollständig ausgehärtet wird, ein zweites Material eingespritzt wird, welches die innere Schicht bildet. Weitere Details eines derartigen Sandwichverfahrens sind der eingangs erwähnten Anmeldung der Anmelderin zu entnehmen. Durch diese erfindungsgemäße Ausgestaltung kann die Migrationsvermeidung mit den in der eingangs genannten Anmeldung genannten Vorteilen einer Fertigung in einem Sandwichverfahren verbunden werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.** 1: zeigt einen erfindungsgemäßen Griff mit einem Griffkern, einer GriffkernUmmantelung, einer inneren Schicht und einer äußeren Schicht in einem Längsschnitt.
- **Fig. 2**: zeigt den Griff gemäß Fig. 1 in einem Querschnitt II-II.
- **Fig. 3**: zeigt einen weiteren erfindungsgemäßen Griff mit einem Griffkern, einer inneren Schicht und einer äußeren Schicht in einem Längsschnitt.
- **Fig. 4**: zeigt den Griff gemäß Fig. 3 in einem Querschnitt IV-IV.
- **Fig. 5**: zeigt eine weitere Querschnittsgestaltung eines erfindungsgemäßen Griffs.
- **Fig. 6**: zeigt eine weitere Querschnittsgestaltung eines erfindungsgemäßen Griffs.

### FIGURENBESCHREIBUNG

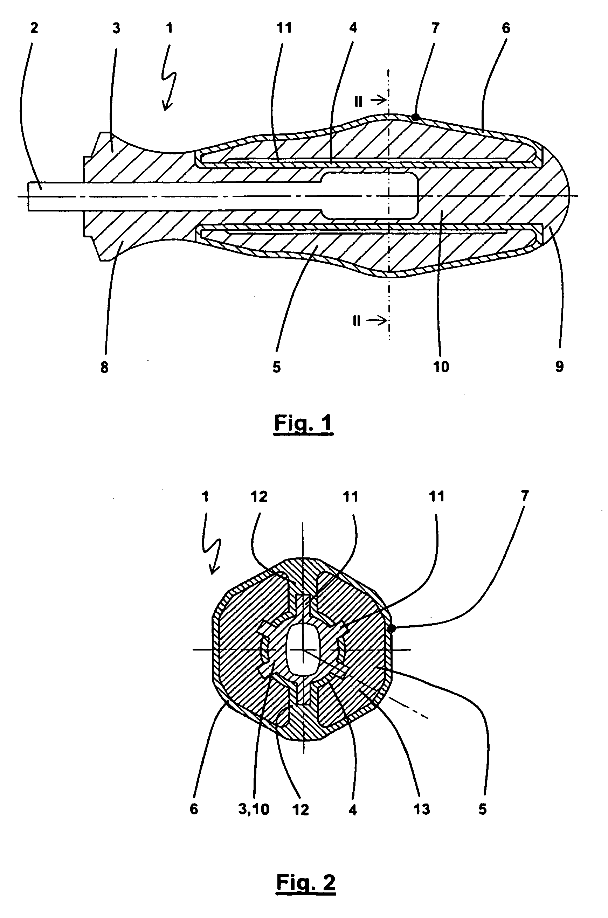

**Fig. 1** zeigt einen Griff 1, der beispielhaft Einsatz findet für einen Schraubendreher. In dem Griff 1 ist in diesem Fall ein Schaft 2 eines Funktionsteils, hier mit einer Schraubendreherklinge, fest aufgenommen, um Längskräfte oder Torsionsmomente aufzunehmen. Der Schaft 2 ist in diesem Fall in dem der Funktionsspitze des Schafts gegenüberliegenden Endbereich mit einem Griffkern 3 ummantelt, welcher in erster Näherung als hantelförmig zu bezeichnen ist mit endseitigen Verdickungen 8, 9, welche über einen hohlzylinderförmigen Verbindungsbereich 10 miteinander verbunden sind. Der Griffkern 3 ist mit einem harten Kunststoff gebildet.

Wie in **Fig. 2** zu erkennen ist, besitzt der Griffkern in dem Verbindungsbereich 10 gleichmäßig über den Umfang verteilte Rippen 11, hier sechs derartige Rippen 11, die für das in den Fig. 1 und 2 dargestellte Ausführungsbeispiel unterschiedliche radiale Erstreckung besitzen. Der Griffkern 3 ist von einer in erster Näherung zylinderförmigen Griffkern-Ummantelung 4 ummantelt. Die äußere Schicht 6 des Griffs, welche eine Griff-Oberfläche oder -Mantelfläche 7 des Griffs 1 bildet, ist mit dünner Schichtdicke für das dargestellte Ausführungsbeispiel ungefähr hexagonal ausgebildet. Die Griffkern-Ummantelung 4 ist über radial orientierte Verbindungsstege 12, die in Fig. 2 in 12-Uhr-Position sowie in 6-Uhr-Position angeordnet sind, mit der äußeren Schicht 6 verbunden, wobei für das dargestellte Ausführungsbeispiel Griffkern-Ummantelung 4, äußere Schicht 6 und Verbindungsstege einstückig mit demselben Material ausgebildet sind. Die äußere Schicht 6, die Verbindungsstege 12 und die Griffkern-Ummantelung 4 begrenzen in erster Näherung als C-förmig im Querschnitt gemäß Fig. 2 zu bezeichnende Kammern 13, die mit einer inneren Schicht 5 gefüllt sind. Für das in Fig. 2 dargestellte Ausführungsbeispiel entsprechen sich die Schichtdicken der Griffkern-Ummantelung 4 und der äußeren Schicht 6, während die Schichtdicke der inneren Schicht 5 das 3- bis 6-fache der Schichtdicken von der Griffkern-Ummantelung 4 und der äußeren Schicht 6 beträgt. Selbstverständlich sind auch abweichende Schichtdicken möglich. Für den Fall, dass die äußere Schicht 6 durch den Kontakt mit der Formwand schneller abkühlt, während im Umgebungsbereich des Griffkerns die Abkühlung langsamer verläuft, kann die äußere Schicht 6 dicker sein als die Schicht 4.

In Fig. 2 ist weiterhin zu erkennen, dass die verlängerten Rippen 11 sich in die Verbindungsstege 12 erstrecken, während vier etwas kürzer ausgebildete Rippen die Griffkern-Ummantelung 4 durchsetzen und sich geringfügig in die innere Schicht 5 erstrecken. Die Form des Griffkerns, die Anordnung, Zahl und Erstreckung der radialen Rippen kann auch anders ausgeführt sein als in der beispielhaften Darstellung und deren Beschreibung.

Eine Herstellung eines Griffs 1 gemäß Fig. 1 und 2 erfolgt in einem beliebigen Sandwichverfahren, beispielsweise einem Mono-Sandwichverfahren. Weitere Hinweise auf mögliche Fertigungsverfahren für einen derartigen Griff und/oder abweichende Ausgestaltungen von Griffen mit einer äußeren Schicht 6 und einer inneren Schicht 5, für die die erfindungsgemäßen Merkmale ebenfalls Einsatz finden können, sind beispielweise den Patentanmeldungen WO 2007/079787 A1 oder WO 2007/048555 A1 der Anmelderin zu entnehmen.

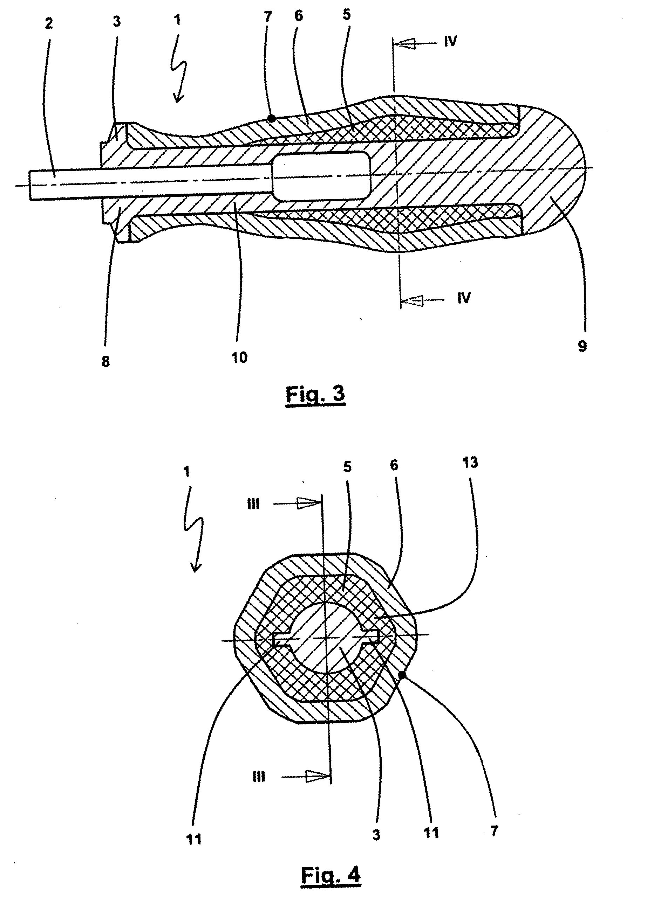

Für das in den **Fig. 3** und **4** dargestellte Ausführungsbeispiel ist der Griff 1 ohne Griffkern-Ummantelung 4 ausgebildet, so dass in einem Teilbereich des Verbindungsbereichs 10 an den Griffkern radial außenliegend unmittelbar die innere Schicht 5 anschließt. Weiterhin ist in diesem Fall der Griffkern 3 lediglich mit zwei Rippen 11 ausgebildet, die sich ungefähr bis zur Hälfte in die innere Schicht 5 erstrecken. In dem Längsabschnitt, in dem zwischen der äußeren Schicht 6 und dem Griffkern 3 die innere Schicht vorgesehen ist, besitzt die äußere Schicht 6 eine ungefähr konstante Schichtdicke, während die Schichtdicke der inneren Schicht 5 von dem Querschnittsbereich IV-IV, in welchem der Durchmesser des Griffs maximal ist, in Richtung der beiden Endbereiche des Griffs 1 abnehmen kann. In dem Querschnitt IV-IV beträgt die Schichtdicke der inneren Schicht 5 das 1- bis 2-Fache oder 1 bis 3-Fache der Schichtdicke der äußeren Schicht.

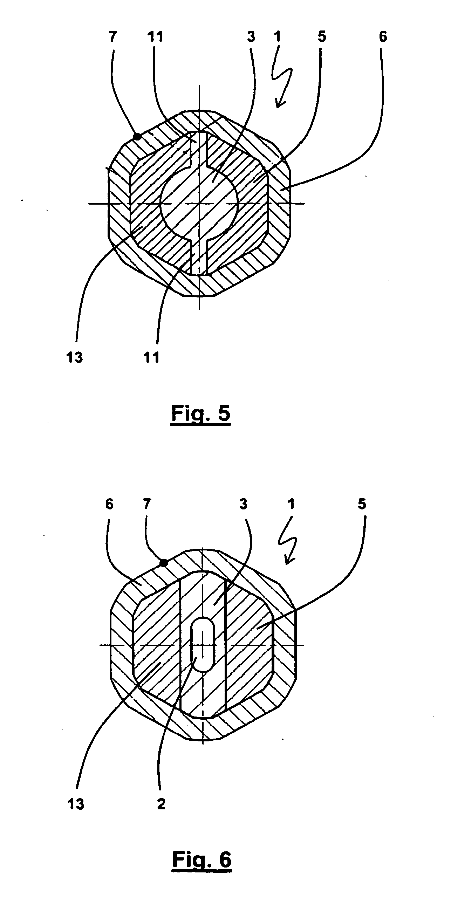

Der in **Fig. 5** dargestellte abweichende Aufbau des Griffs 1 entspricht im Wesentlichen dem Aufbau des Griffs gemäß Fig. 4, wobei in diesem Fall die beiden Rippen 11 sich vollständig durch die innere Schicht 5 erstrecken, so dass Stirnseiten der Rippen 11 unmittelbar an die äußere Schicht 6 angebunden sind.

**Fig. 6** zeigt eine alternative Querschnittsgestaltung, für die der Griff nicht mit einem zylinderförmigen Griffkern und ergänzenden, sich radial nach außen erstreckenden Rippen ausgebildet ist. Vielmehr ist der Griffkern 3 in diesem Fall in erster Näherung rechteckförmig ausgebildet, wobei an die äußere Schicht 6 angrenzende Stirnseiten des Griffkerns 3, hier die Schmalseiten des rechteckförmigen Querschnitts, entsprechend des inneres Konturverlaufs der äußeren Schicht 6 kurvenförmig ausgebildet sein können.

Weitere Ausgestaltungsformen für den Aufbau von Griffen für Werkzeuge, insbesondere Schraubendreher, die eine härtere äußeren Schicht und eine weichere innere Schicht besitzen, können beispielsweise den Patentanmeldungen der Anmelderin, insbesondere DE 10 2005 037 504 A1, WO 2006/069759 A1, WO 2007/079787 A1, WO 2007/048555 A1, DE 10 2006 037 688 A1, DE 10 2006 038 636 A1, DE 10 2006 061 068 A1, DE 20 2005 021 195 U1, DE 10 2005 055 981 A1, DE 10 2007 010 972 A1, DE 10 2007 038 928 A1 und DE 10 2007 015 069 A1 entnommen werden, wo auch mögliche, im Rahmen der Erfindung einsetzbare unterschiedliche Fertigungsverfahren beschrieben sind.

Für die Fertigung von Griffen der beschriebenen Art können solche elastische Kunststoffe eingesetzt werden, bei denen Weichmacher in die Molekülkette eingebaut bzw. mit dieser vernetzt sind, so dass eine "innere" Weichmachung gegeben ist. Ein derart eingebundener Weichmacher neigt nur in geringem Maß zur Migration. Beispielsweise kann es sich bei dem Kunststoff mit innerer Weichmachung um EPDM+PP-X (vernetzt) oder (Ethylen/Propylen-Terpolymer/Polypropylen) oder Polyester-Weichmacher handeln. Ebenfalls als geeignet haben sich Kunststoffe herausgestellt, die sehr wenig Weichmacher enthalten, wie beispielsweise NR+PP-X (vernetzt) auf der Basis von Naturkautschuk oder weichmacherfreies TPU, thermoplastisches Polyurethan geringer Härte.

Für die Herstellung der Griffe eignen sich Kunststoffe, die aus SBS (Styrol/Butadien/Styrol) oder SEBS (Styrol/Ethenbuten/Styrol) oder EPDM (Ethylen/Propylen/Dien/Kautschuk) oder EVA (Ethylen/Vinylacetat) oder PP (Polypropylen) oder PE (Polyethylen) oder TPEE (thermoplastische Polymere Basis Polyester) oder TPU (thermoplastisches Polyurethan) bestehen oder als Compound in verschiedenen Kombinationen miteinander verschnitten sind. Um die Weichmacher einzustellen, können Weichmacher zugegeben werden, die mit der jeweiligen Polymermatrix verträglich sind.

Es kann auch Silikonkautschuk mit entsprechenden Härten für die innere und äußere Schicht verwendet werden. Silikonkautschuk ist frei von Weichmachern, so dass das Problem der Migration nicht auftritt.

Die innere Schicht kann eine geschlossene Struktur haben oder eine poröse Struktur. Die poröse Struktur wird erzeugt, indem dem Kunststoff ein Treibmittel (Schäummittel) zugegeben wird, welches bei der Verflüssigungstemperatur des Kunststoffes vergast und in den Kunststoff Poren bildet.

Die Griffe werden bei einer ersten Herstellungsweise im Sandwichverfahren hergestellt, bei dem die innere Schicht und die äußere Schicht in einem Spritzgieß-Schritt durch aufeinanderfolgendes Einspritzen der verschiedenen Kunststoffe in die Formkavität entstehen. Es kann dabei das Mono-Sandwichverfahren angewendet werden, bei dem zunächst der die äußere Schicht bildende Kunststoff aus einem eigenen Spritzgießaggregat mit einer vorgegebenen Dosiermenge in das Spritzgießaggregat eingespeist wird, in der der die innere Schicht bildende Kunststoff plastifiziert wird. Beim eigentlichen Spritzgießvorgang werden beide Kunststoffe ohne Unterbrechung durch denselben Einspritzkanal in die Formkavität eingespritzt. Ebenfalls kann eine gezielte Unterbrechung gewählt werden, wobei dennoch derselbe Einspritzkanal (oder ein abweichender Einspritzkanal) genutzt werden kann. Die Menge des die innere Schicht bildenden Kunststoffs wird dabei ebenfalls durch die Steuerung des Spritzgießaggregats vorgegeben.

Bei einem anderen Sandwichverfahren wird zuerst der die äußere Schicht bildende Kunststoff aus seiner Plastifiziereinheit mit der vorgegebenen Dosiermenge direkt in die Formkavität eingespritzt und unmittelbar danach der die innere Schicht bildende Kunststoff mit der vorgegebenen Dosiermenge aus der anderen Plastifiziereinheit. Auch hier erfolgt das Einspritzen in die Form durch denselben Einspritzkanal. Die Umschaltung des Massestroms des ersten Kunststoffs zum Massestrom des zweiten Kunststoffs erfolgt durch ein Ventilsystem, welches zwischen den Plastifiziereinheiten und der Form angeordnet ist.

Beim Sandwichverfahren bildet der zuerst in die Form eingespritzte Kunststoff einen Masseballen, in dessen noch flüssiges Zentrum der zweite eingespritzte Kunststoff eindringt, wodurch der Masseballen räumlich aufgeweitet wird, bis er allseits an der Wandung der Formkavität anliegt. Der zuerst eingespritzte Kunststoff bildet nunmehr die Außenschicht des Spritzgießteils, wobei sich eine dünne Schicht aus diesem Material auch um den Griffkern herum bildet, während der zweite eingespritzte Kunststoff die Innenschicht bildet. Die dünne Schicht um den Griffkern wird auch als Griffkern-Ummantelung bezeichnet.

Bei einer weiteren Herstellungsweise wird die innere Schicht in einem ersten Spritzgieß-Schritt in einer ersten Form auf den Griffkern aufgespritzt. Hieran anschließend wird die äußere Schicht in einer zweiten Form auf die innere Schicht in einem zweiten Spritzgieß-Schritt aufgespritzt. Dabei ist die Formkavität der zweiten Form um so vieles größer als die der ersten Form, wie zur Ausbildung der Dicke und Erstreckung der zweiten Schicht erforderlich ist. Ein derartiges Verfahren ist ohne Ausbildung einer Griffkern-Ummantelung möglich, wobei auch der Griffkern vor dem Einlegen in die genannte erste Form mit einer Griffkern-Ummantelung versehen sein kann. Diese Herstellungsweise kann zu einem Griffaufbau führen, wie dieser beispielhaft in Fig. 3 bis 6 dargestellt ist. Bei Einsatz einer derartigen Herstellungsweise kann sich eine Dicke der äußeren Schicht 6 ergeben, die größer ist als bei einer Herstellung unter Einsatz eines Sandwich-Verfahrens. Eine derart vergrößerte Dicke für ein mehrstufiges Spritzgieß-Verfahren kann daraus folgen, dass bei dieser Herstellungsweise der äußeren Schicht 6 aus einem thermoplastischen Elastomer (TPE) ein relativ großer Zwischenraum zwischen dem eingelegten Griffkern und der aufgespritzten inneren Schicht und der Wand der zweiten Form bleiben muss. Grund hierfür ist u. U., dass anderenfalls das Material beim Umspritzen der inneren Schicht an der Formwand zu schnell erkaltet und die von der Einspritzöffnung entfernten Bereiche der inneren Schicht nicht mehr umschlossen werden, weil der Massefluss schon zum Stehen gekommen ist.

### BEZUGSZEICHENLISTE

- 1: Griff
- 2: Schaft
- 3: Griffkern
- 4: Griffkern-Ummantelung
- 5: innere Schicht
- 6: äußere Schicht
- 7: Mantelfläche
- 8: Endbereich
- 9: Endbereich
- 10: Verbindungsbereich
- 11: Rippe
- 12: Verbindungssteg
- 13: Kammer

## Patentansprüche

1. Griff (1) für ein Werkzeug zur Übertragung eines Torsionsmomentes oder einer Druckkraft,
a) mit einer äußeren Schicht (6) aus elastischem Kunststoff mit nicht poröser Struktur und einer ersten Härte im Bereich von 30 bis 60 Shore A,
b) einer inneren Schicht (5) aus elastischem Kunststoff mit einer zweiten Härte im Bereich 10 bis 55 Shore A,
c) wobei die zweite Härte geringer ist als die erste Härte,
d) und einem Griffkern (3) aus einem harten Kunststoff,
**dadurch gekennzeichnet, dass**
e) in der die innere Schicht (5) bildende Kunststoff einen freien Weichmachergehalt enthält, der wenigstens 60 % und höchstens 130 % des freien Weichmachergehalts in dem die äußere Schicht (6) bildenden Kunststoff beträgt.

2. Griff (1) nach Anspruch 1, **dadurch gekennzeichnet, dass** die geringere Härte der inneren Schicht (5) herbeigeführt ist mit Verwendung eines höheren gebundenen Weichmachergehalt in der inneren Schicht (5) als in der äußeren Schicht (6).

3. Griff (1) nach Anspruch 2, **dadurch gekennzeichnet, dass** der Kunststoff der inneren Schicht (5) durch einen gebundenen Polyester-Weichmacher auf einen niedrigen Härtewert eingestellt ist.

4. Griff (1) nach einem der Ansprüche 1 bis 3, **dadurch gekennzeichnet, dass** die geringere Härte der inneren Schicht (5) herbeigeführt ist durch einen höheren Gehalt eines harten Füllstoffes in der äußeren Schicht (6) als in der inneren Schicht (5).

5. Griff (1) nach Anspruch 1 bis 4, **dadurch gekennzeichnet, dass** der die innere Schicht (5) bildende Kunststoff einen Schmelzfluss-Index oder eine Schmelz-Volumenfließrate MVR aufweist, der oder die höchstens 30 % vom Schmelzfluss-Index oder der Schmelz-Volumenfließrate MVR des die äußere Schicht (6) bildenden Kunststoffes abweicht.

6. Griff (1) nach Anspruch 1 bis 5, **dadurch gekennzeichnet, dass** als gebundener oder freier Weichmacher in der inneren Schicht (5) und/oder äußeren Schicht (6) wenigstens eine Verbindung ausgewählt ist aus der Gruppe umfassend Diethylhexylphthalat (DEHP), Olivenöl, Phthalsäureester, einen Alkylsulfonsäureester des Phenols (ASE), Chlorparaphine, Trimellitate, aliphatische Diacarbonsäureseter, Polyester, Phosphorsäureester, Fetträureester, Hydroxycarbonsäureester, Epoxide und Solfoxide/Sulfone, Lärchenharz, Rizinusöl, Parafinöl, Diisononylphthalat (DINP). Acetine, Adimoll^{®}, Displamoll^{®}, Mesamoll^{®}, Triacetin, Ultramoll^{®} oder Unimoll^{®}.

7. Griff (1) nach Anspruch 1 bis 6, **dadurch gekennzeichnet, dass** die inneren Schicht (5) und/oder äußere Schicht mit Silikon-Kautschuk gebildet ist.

8. Griff (1) nach Anspruch 1 bis 7, **dadurch gekennzeichnet, dass**
a) der Griff mit einem Griffkern, einer Griffkern-Ummantelung, der inneren Schicht (5) und der äußeren Schicht gebildet ist, wobei die Griffkern-Ummantelung und die äußere Schicht aus demselben Material bestehen, und
b) Griffkern-Ummantelung, innere Schicht und äußere Schicht in einem Sandwichverfahren auf den Griffkern aufgespritzt sind.

9. Griff (1) nach einem der Ansprüche 1 bis 7, **dadurch gekennzeichnet, dass**
a) der Griff mit einem Griffkern, einer inneren Schicht (5) und einer äußeren Schicht (6) gebildet ist und
b) die innere Schicht (5) in einem ersten Spritzgieß-Schritt in einer ersten Form auf den Griffkern oder eine Griffkernummantelung aufgespritzt wird und hieran anschließend in einer zweiten Form in einem zweiten Spritzgieß-Schritt die äußere Schicht (6) auf die innere Schicht (5) aufgespritzt wird, wobei die Formkavität der zweiten Form um so vieles größer ist als die Formkavität der ersten Form, wie zur Ausbildung der Dicke der zweiten Schicht erforderlich ist.

## Claims

1. Handle (1) for a tool for transferring a torsional moment or a longitudinal force,
a) with an outer layer (6) of an elastic plastic material having a non-porous structure and comprising a first hardness in the range of 30 to 60 Shore A,
b) an inner layer (5) made of an elastic plastic material having a second hardness in the range of 10 to 55 Shore A,
c) the second hardness being smaller than the first hardness,
d) with a core (3) of the handle made of a hard plastic material,
**characterised by**
e) the plastic material building the inner layer (5) comprising a percentage of a free softener being at least 60 % and at most 130 % of the percentage of the free softener in the plastic material building the outer layer (6).

2. Handle (1) according to claim 1, **characterised by** the smaller hardness of the inner layer (5) being provided by using a higher percentage of linked softener in the inner layer (5) than in the outer layer (6).

3. Handle (1) according to claim 2, **characterised by** the plastic material building the inner layer (5) having a lower hardness due to a used linked polyester-softener.

4. Handle (1) according to one of claims 1 to 3, **characterised by** the smaller hardness of the inner layer (5) being due to a higher percentage of a hard filling material in the outer layer (6) than in the inner layer (5).

5. Handle (1) according to one of claims 1 to 4, **characterised by** the plastic material building the inner layer (5) having a melting flow index or a melting volumetric flow rate MVR deviating at most 30 % from the melting flow index or the melting volumetric flow rate MVR of the plastic material building the outer layer (6).

6. Handle (1) according to one of claims 1 to 5, **characterised by** a linked or free softener in the inner layer (5) and/or the outer layer (6) being diethylhexylphthalate (DEHP), olive oil, phthalic acid ester, alkylsulfonic acid ester of phenol (ASE), chlorinated paraffins, trimellitate, aliphatic dicarboxylic acid ester, polyester, phosphoric acid ester, fatty acid ester, hydroxycarboxylic acid ester, epoxide and sulfoxide/sulfone, larch resin, castor oil, paraffin oil, diisononylphthalate (DINP), acetine, adimoll^{®}, displamoll^{®}, mesamoll^{®}, triacetin, ultramoll^{®} and/or unimoll^{®}.

7. Handle (1) according to one of claims 1 to 6, **characterised by** the inner layer (5) and/or the outer layer being built with silicone rubber.

8. Handle (1) according to one of claims 1 to 7, **characterised by**
a) the handle being built with a core, a coating sheet of the core, the inner layer (5) and the outer layer, wherein the coating sheet of the core and the outer sheet are made from the same material and
b) the coating sheet of the core, the inner layer and the outer layer are injection-molded on the core by a sandwich procedure.

9. Handle (1) according to one of claims 1 to 7, **characterised by**
a) the handle being built with a core, an inner layer (5) and an outer layer (6) and
b) the inner layer (5) being injection-molded in a first injection-molding step in a first mold on the core or the coating sheet of the core and subsequently in a second mold the outer layer (6) being injection-molded in a second injection-molding step on the inner layer (5), wherein the cavity of the second mold is larger than the cavity of the first mold in an extent suitable for building the second layer with the desired thickness.

## Revendications

1. Poignée (1) pour un outil pour la transmission d'un couple de torsion ou d'une force de pression,
a) avec une couche extérieure (6) en plastique élastique avec une structure non poreuse et une première dureté dans l'intervalle de 30 à 60 Shore A
b) avec une couche intérieure (5) en plastique élastique avec une deuxième dureté dans l'intervalle de 10 à 55 Shore
c) la deuxième dureté étant inférieure à la première,
d) et une âme de poignée (3) en un plastique dur,
**caractérisée en ce que**
e) dans le plastique formant la couche intérieure (5) contient une teneur libre de plastifiant qui est d'au moins 60 % et d'au plus 130 % de la teneur libre de plastifiant dans le plastique formant la couche extérieure (6).

2. Poignée (1) selon la revendication 1, **caractérisée en ce que** la dureté plus faible de la couche intérieure (5) est produite par l'utilisation d'une teneur plus élevée de plastifiant lié dans la couche intérieure (5) que dans la couche extérieure (6).

3. Poignée (1) selon la revendication 2, **caractérisée en ce que** le plastique de la couche intérieure (5) est ajusté à une faible valeur de dureté par un plastifiant lié de polyester.

4. Poignée (1) selon l'une quelconque des revendications 1 à 3, **caractérisée en ce que** la dureté plus faible de la couche intérieure (5) est produite par l'utilisation d'une teneur plus élevée d'une charge de matière dure dans la couche extérieure (6) que dans la couche intérieure (5).

5. Poignée (1) selon les revendications 1 à 4, **caractérisée en ce que** le plastique formant la couche intérieure (5) présente un indice de fluidité (Melt Flow Index) ou une vitesse d'écoulement volumique (Melt Flow Rate MVR) qui diffèrent au plus de 30 % de l'indice de fluidité (Melt Flow Index) ou de la vitesse d'écoulement volumique (Melt Flow Rate MVR) du plastique formant la couche extérieure (6).

6. Poignée (1) selon les revendications 1 à 5, **caractérisée en ce que** comme plastifiant lié ou libre dans la couche intérieure (5) et/ou dans la couche extérieure (6), au moins un composé est choisi parmi le groupe comprenant le phtalate de diéthylhexyle (DEHP), l'huile d'olive, des esters de l'acide phtalique, un ester alkylsulfonique du phénol (ASE), des paraffines chlorées, des trimellitates, des esters d'acides dicarboxyliques aliphatiques, des polyesters, des esters de l'acide phosphorique, des esters d'acides gras, des esters d'acides hydroxycarboxyliques, des époxydes et des sulfoxydes/sulfones, la résine de mélèze, l'huile de ricin, l'huile de paraffine, le phtalate de diisononyle, l'acétine, l'Adimoll®, le Mesamoll®, la triacétine, l'Ultramoll® ou l'Unimoll®.

7. Poignée (1) selon les revendications 1 à 6, **caractérisée en ce que** la couche intérieure (5) et/ou la couche extérieure (6) sont formées avec du caoutchouc de silicone.

8. Poignée (1) selon les revendications 1 à 7, **caractérisée en ce que**
a) la poignée est constituée d'une âme de poignée, d'un enrobage de l'âme de la poignée, de la couche intérieure (5) et de la couche extérieure, l'enrobage de l'âme de la poignée et la couche extérieure consistant en le même matériau,
b) l'enrobage de l'âme de la poignée, la couche intérieure et la couche extérieure sont injectés sur l'âme de la poignée en un procédé sandwich.

9. Poignée (1) selon l'une quelconque des revendications 1 à 7, **caractérisée en ce que**
a) la poignée est constituée d'une âme de poignée, d'une couche intérieure (5) et d'une couche extérieure (6) et
b) la couche intérieure (5) est injectée dans une première étape de moulage par injection dans un premier moule sur l'âme de la poignée ou sur un enrobage de l'âme de la poignée, et ensuite, dans un deuxième moule, dans une deuxième étape de moulage par injection, la couche extérieure (6) est injectée sur la couche intérieure (5), l'empreinte du deuxième moule étant plus grande que l'empreinte du premier moule d'une valeur telle qu'elle est nécessaire à la formation de l'épaisseur de la deuxième couche.
